## Europäisches Patentamt

## European Patent Office

## Office européen des brevets

(11) Publication number: **0 084 284**
**A2**

# (12) EUROPEAN PATENT APPLICATION

(21) Application number: **82402392.3**

(22) Date of filing: **28.12.82**

(51) Int. Cl.³: **G 07 C 3/14**
**B 21 J 9/20**

(30) Priority: **08.01.82 US 337901**

(43) Date of publication of application:
**27.07.83 Bulletin 83/30**

(84) Designated Contracting States:
**AT BE CH DE FR GB IT LI LU NL SE**

(71) Applicant: **Accurate Threaded Fasteners, Inc.**
**3550 West Pratt Avenue**
**Lincolnwood Illinois 60645(US)**

(72) Inventor: **McGowan, Michael J.**
**05173 Route 53**
**Lombard Illinois 60148(US)**

(72) Inventor: **Cash III, Carson D.**
**4607 Eberly Avenue Apt. 2**
**Brookfield Illinois 60513(US)**

(72) Inventor: **Slavik, William H.**
**9034 Stratford Avenue**
**Palos Hills Illinois 60465(US)**

(74) Representative: **Netter, André et al,**
**Cabinet NETTER 40, rue Vignon**
**F-75009 Paris(FR)**

(54) **Material forming machine controller.**

(57) A control method and apparatus for a metal-forming machine such as a cold heading machine are described. The described method and apparatus monitor machine operation during production and permit relatively large deviations from a prescribed norm over a short term without shutting down the machine, while ensuring longer term compliance to relatively small tolerances from the norm. The described controller first determines an average of a measured parameter such as the hit energy applied to a group of workpieces resulting in acceptable metal-forming during a training mode and then stores this average as a target value. The controller then establishes a set of tolerance windows to be used to control forming operations in a production mode.

In production, the controller repeatedly measures the machine parameter and then compares selected averages of the measured parameter with the target value and the respective tolerance window, and indicates out-of-tolerance condition whenever one of the selected average falls outside the respective window. The tolerance windows are selected such that short term averages or single values of the measured parameter must deviate from the target values by larger amounts than long term averages before the controller signals an out-of-tolerance condition. For example, the described controller operates to interrupt machine operation when a single measured value of hit energy deviates by more than 16% from the learned target value, when a group of 4 measured values of hit energy deviates by more than 8%, when a group of 16 measured values of hit energy deviates by more than 4%, or when a group of 64 measured values of hit energy deviates by more than 1%.

The disclosed controller also signals when the measured parameter is nearing an out-of-tolerance condition, and it acts to change the target value gradually during a warmup period of machine operation in order to reduce the number of unnecessary interruptions of machine operation.

./...

FIG. 1

1

# MATERIAL FORMING MACHINE CONTROLLER

## BACKGROUND OF THE INVENTION

The present invention relates to a controller for material forming machines such as metal forming machines. The illustrated embodiment relates particularly to a controller for cold heading machines.

In the fastener industry, steel wire is often pressed, rather than cut, as an initial step in making workpieces such as screws, for example. In this pressing, known as cold forming or cold heading, a cold heading machine is used in which a moving die hits a wire slug in a stationary die, typically at a rate of 100 to 450 workpieces per minute.

Cold heading machines have often in the past required operators to determine whether the machine should be stopped due to any one of a variety of causes, such as inadequate quality of the incoming wire, blockage of the feeding mechanism, depletion of the wire supply, blockage of a die by misfed parts, tool breakage, excessive tool wear, or completion of the batch.

Recently, at least one attempt has been made to automate the control of cold heading machines. One known controller uses a microprocessor to determine, it is believed, whether a prescribed tolerance has been exceeded in the force applied to the wire by the cold heading machine. If this tolerance is exceeded, the controller shuts off the machine. An important problem with this known controller is that it is prone to shut down a machine unnecessarily if the tolerance is reasonably set when a "hard spot" is encountered in the wire. Such a "hard spot" can for example, correspond to a localized increase in wire size at a point where two reels of wire have been joined, and can result in a single workpiece or only a small member of workpieces being beyond tolerance. In the present commercial context, hard spots are often quite widely spaced, and it is often commercially acceptable to provide a certain number of parts beyond tolerance in a given run, so long as a minimum number of parts within tolerance are produced. As a result, an operator using this machine controller will: (1) suffer an unnecessary interruption of machine operation each time a hard spot in the wire is encountered; or (2) manually adjust the tolerance to wide margins and run an excess number of parts, resulting in excessive scrap; or (3) use wide tolerances without an excess number of parts, thereby risking failure to produce the prescribed minimum number of parts within tolerance. Each of these options brings with it commercial disadvantages.

One object, therefore, of the present invention is to overcome the very many problems with such known controller and to provide an improved controller which will permit a hard spot in the wire to be processed unless it results in an excessive number of out-of-tolerance pieces. A further object is to provide a less expensive controller: currently the cost of the known microprocessor-based controller is $10,000-$15,000 per cold heading machine. One object of the present invention is to reduce this cost significantly.

Another object is to simplify the operation of the controller for the machine operator, and to provide means for effective communication between the machine operator and the controller.

## SUMMARY OF THE INVENTION

According to the illustrated embodiment of the present invention, a detector is placed on a material forming machine such as a cold heading machine. This detector cooperates with circuitry associated with the machine to develop a sequence of measured signals representing a machine parameter such as the energy delivered by the machine to each workpiece during a forming operation. The sequence of measured signals is supplied as an input to a control unit which performs various calculations relating to tolerance and controls the operation of several machines.

The illustrated controller first is put through a setup mode of operation in which an operator sets up a cold heading machine and commences running. After determining that the machine is properly running and producing good parts, he instructs the controller to enter a training mode in which a target value representative of the average of the measured signals during a selected period is calculated. This target value is retained in a memory in the controller, and the controller then advances to a production mode.

In the production mode, the controller of this invention allows for relatively large intermittent deviations of the measured signal from the target value, but still permits the machine to continue operating provided that the long term deviations of the measured signal from the target value are within acceptable limits. It will be appreciated that such long term deviations, if excessive, would result in a substantial number of workpieces being formed which must be scrapped due to excessive deviations from the desired target value.

Accordingly, the invented system makes not one but an entire set of tolerance comparisons between the measured signals obtained in the production mode and the target value developed in the training mode. Illustratively, the system works with the following signals:

(a)  individual measured signals;

(b)  the average of four consecutive measured signals;

(c)  the average of 16 consecutive measured signals; and

(d)  the average of 64 consecutive measured signals.

In other words, the illustrated system uses groups having sample spaces of 1, 4, 16 and 64. In the following specification and claims, the term "summary signal" will be used in a broad sense to cover the four types of signals enumerated above, as well as other signals indicative of the value of groups of one or more measured signals.

Illustratively, the invented controller will permit a relatively wide deviation of $\pm$ 16% tolerance from the target value for a single measured signal. For the average of four consecutive measured signals, the controller allows a smaller tolerance only of $\pm$ 8%. For the average of 16 consecutive measured signals, the system allows a still smaller tolerance of $\pm$ 4%, and for the average of 64 consecutive measured signals, the invented system allows the smallest tolerance of only 2% of the target value developed in the training mode.

These tolerances can be adjusted by an operator through the use of a keyboard or other types of input devices on the controller. Preferably, adjustable scalers permit the entire set of tolerances to be multiplicatively adjusted.

According to another aspect of this invention, the controller is provided with means for indicating when the measured signals are nearing an out-of-tolerance condition. If, in response to this indication, an operator can adjust the respective machine while it is running, unnecessary interruptions in machine operation may be avoided.

The preferred embodiment of this invention further includes means for automatically and gradually modifying the target value to track changes in the measured signal automatically during an initial warm-up period of machine operation, thereby further reducing the incidence of unnecessary interruptions.

The present invention has applications not only in controllers for cold heading machines, but also in the arts of forging, metal stamping, extruding, and injection molding for example. The beneficial effects of this control system will be to decrease overruns, increase tool life, decrease maintenance costs, reduce operator workloads, and reduce production of scrap parts, i.e., those parts which exceed desired tolerances.

## BRIEF DESCRIPTION OF THE DRAWINGS

In describing the illustrated control system, reference is made to the appended drawings wherein:

FIGURE 1 is a sketch showing a cold heading machine, which includes a machine box, and a control unit;

FIGURE 2 is a block diagram of the control unit of FIG. 1;

FIGURES 2a-2b together make up a schematic diagram of the circuitry of the control unit of FIG. 2;

FIGURE 3 is a block diagram of the machine box of FIG. 1;

FIGURE 4 is a schematic diagram of the circuitry of the machine box of FIG. 1;

FIGURE 4a is a waveform diagram illustrating the operation of the circuitry of FIG. 4;

FIGURE 5 is a graphical sketch relating allowable tolerance to the number of separate measured signals included in an average, and is useful in comprehending the operation of the invented system;

FIGURE 6 is a flowchart of the main system loop and interrupt routines;

FIGURE 7 is a flowchart of the accumulation and threshold testing routines;

FIGURE 7a is a flowchart of a portion of the routine of FIG. 7;

FIGURE 8 is a flowchart of the numeric display update routine;

FIGURE 9 is a flowchart of the keyboard and conversation handler routine;

FIGURE 10 is a flowchart of the key and button interrupt routine; and

FIGURE 11 is a flowchart of the measured signal interrupt routine.

DETAILED DESCRIPTION OF THE PRESENTLY PREFERRED EMBODIMENTS

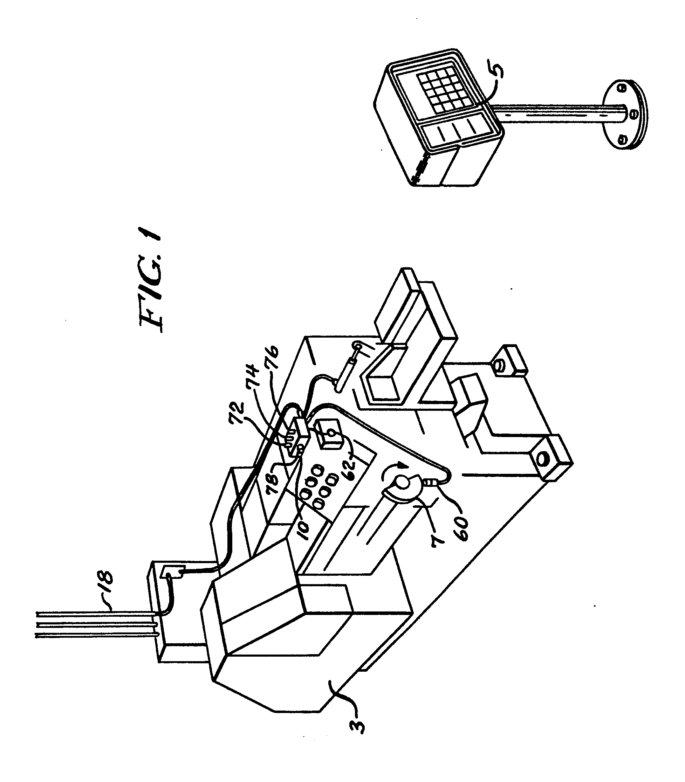

FIG. 1 shows a cold heading machine 3 which includes a "machine box" 10 which is coupled to a control unit 5. In this preferred embodiment, the control unit 5 also monitors and controls three further cold heading machines (not illustrated in FIG. 1).

As will be explained in detail below, the machine box 10 includes a red status lamp 72, an amber status lamp 74, a green status lamp 76 and a reset button 78. The lamps 72,74,76 are controlled by the control unit 5 to indicate the status of the machine 3, and the button 78 is used by an operator to change the status of the machine 3. Furthermore, the machine box 10 can be controlled by the control unit 5 to terminate operation of the machine 3.

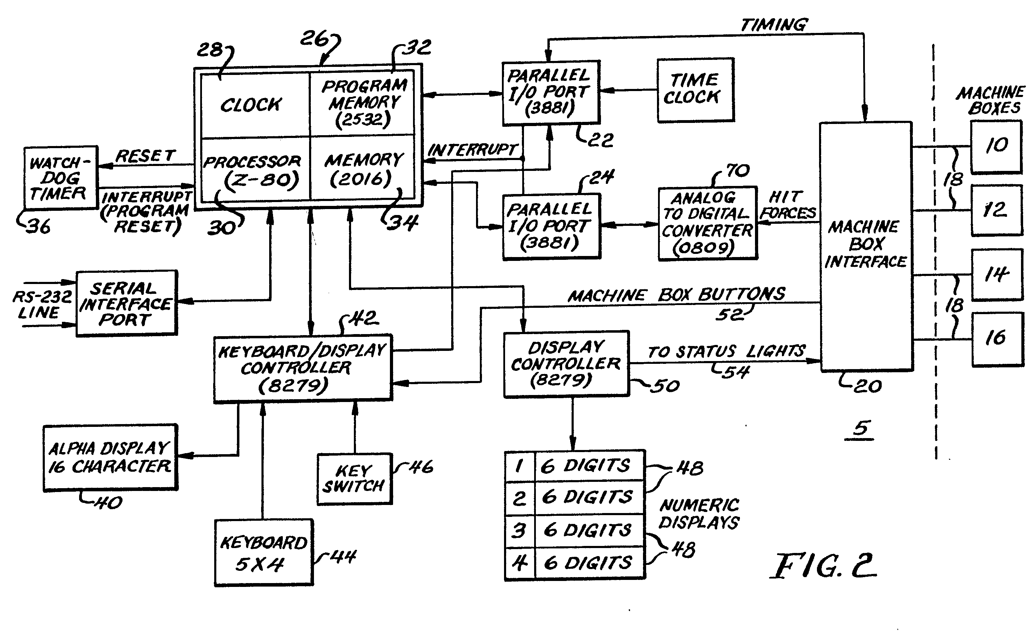

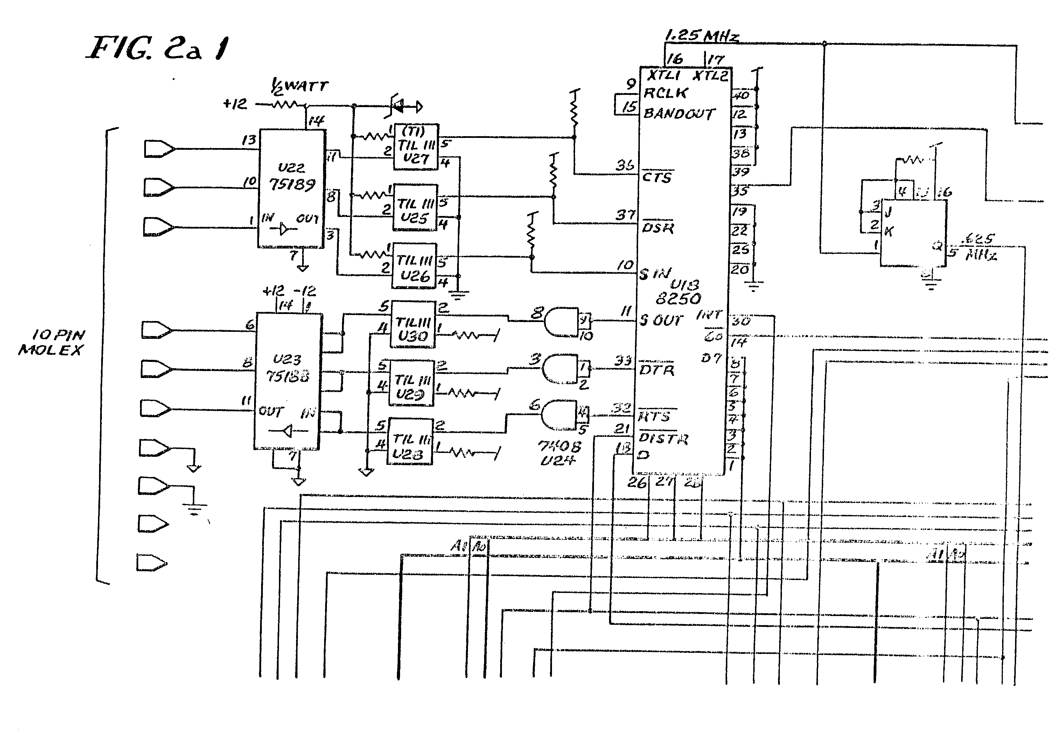

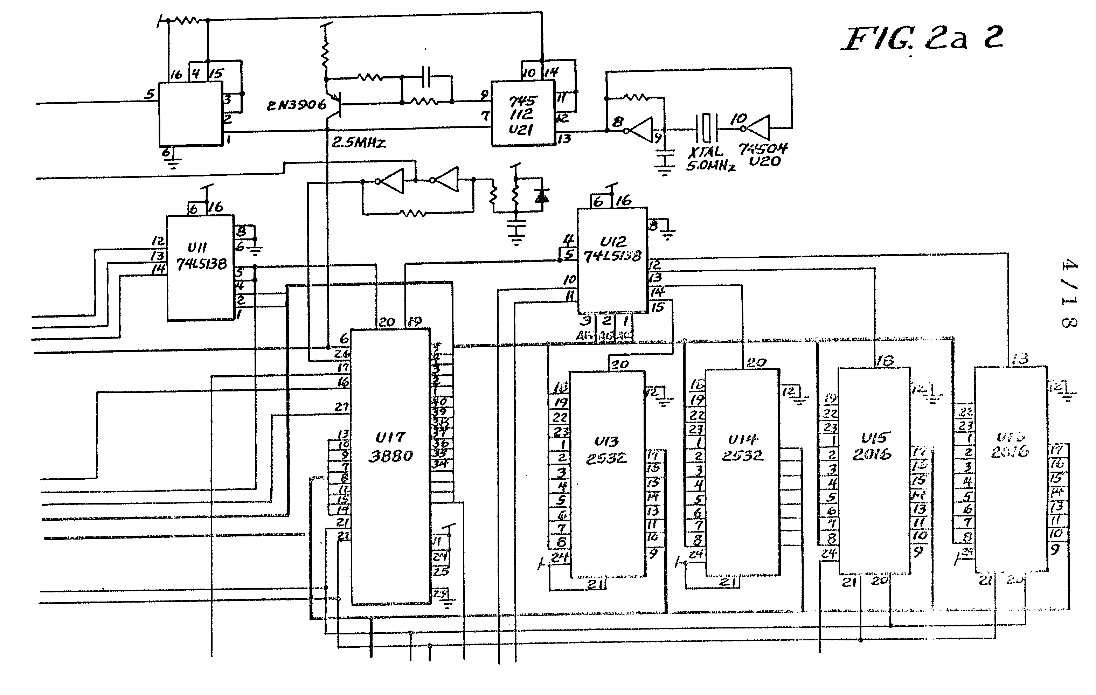

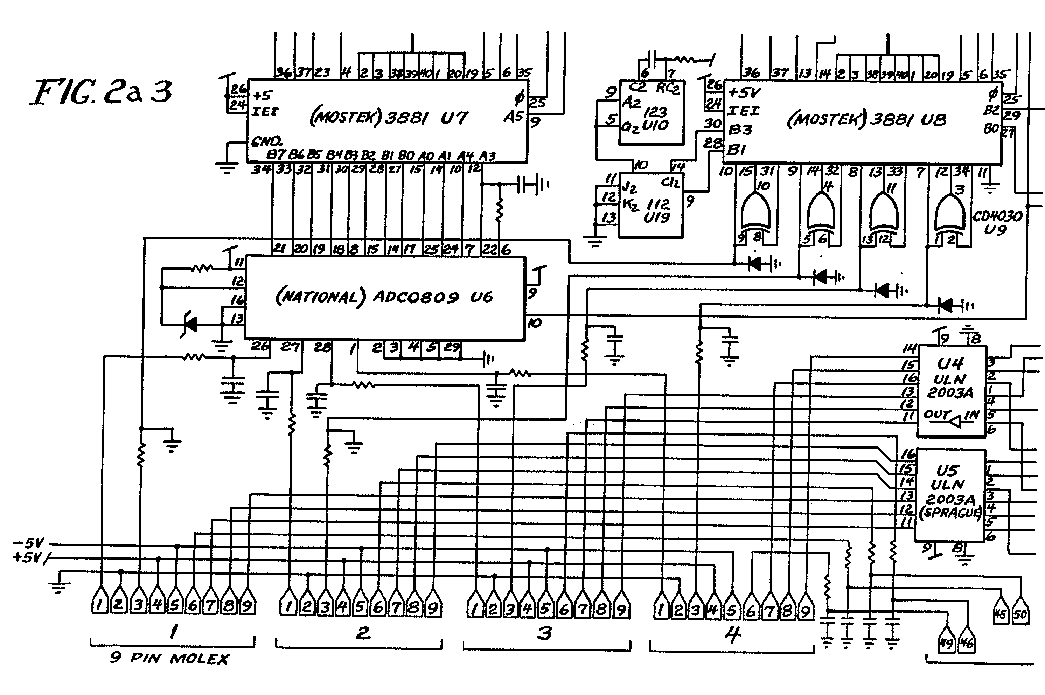

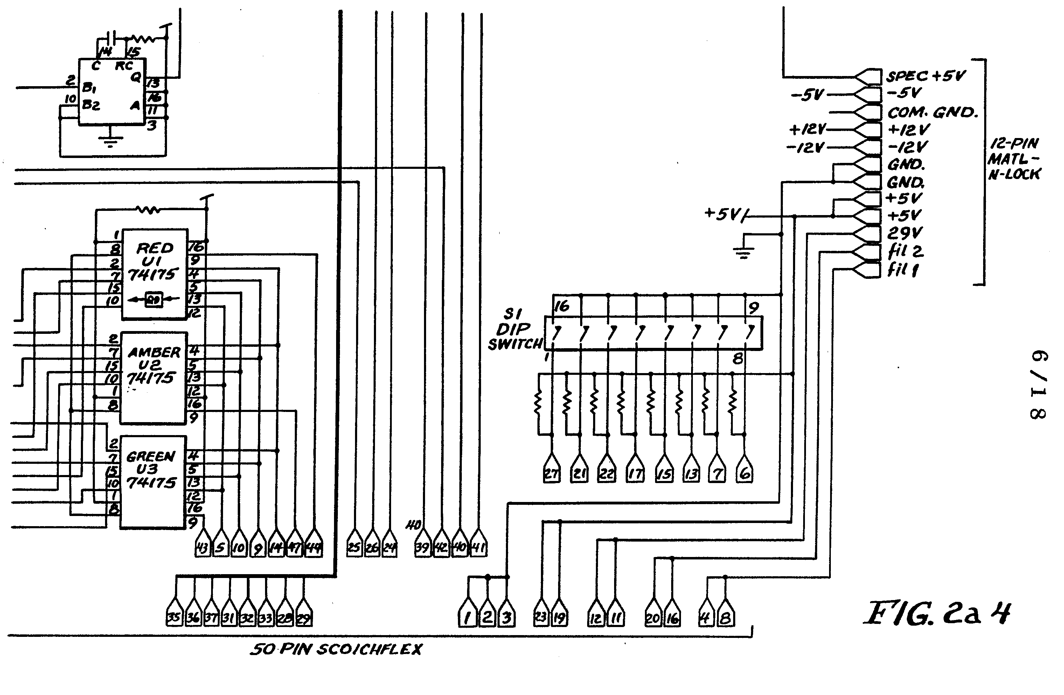

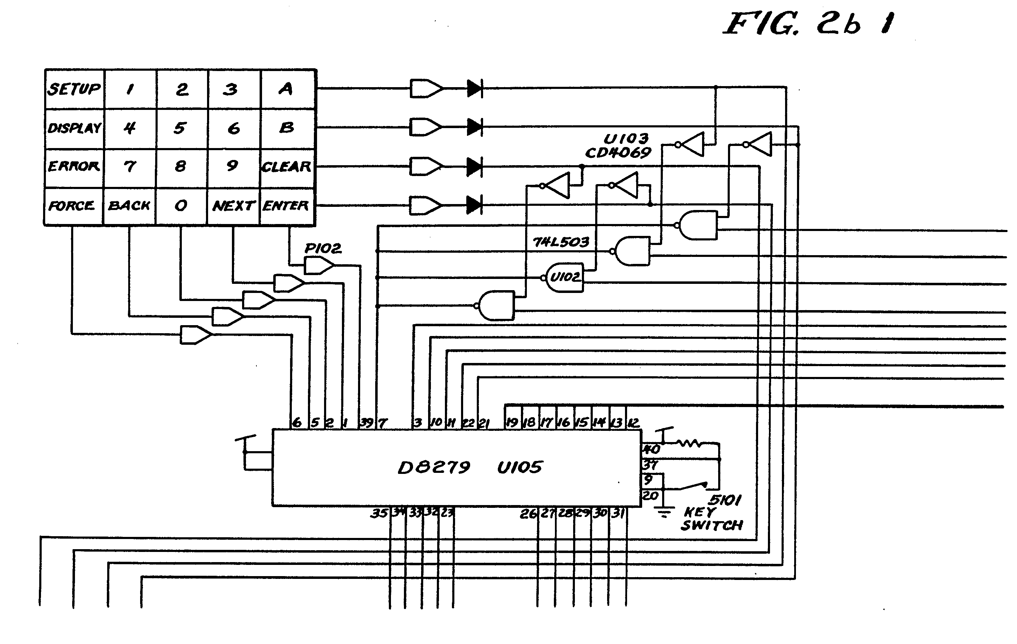

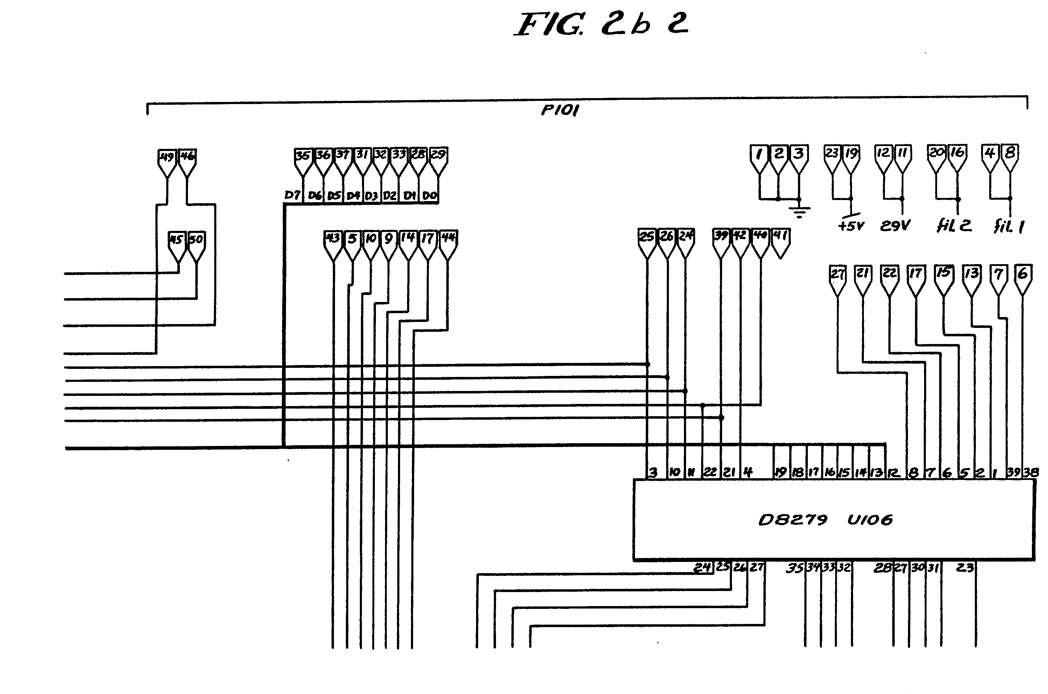

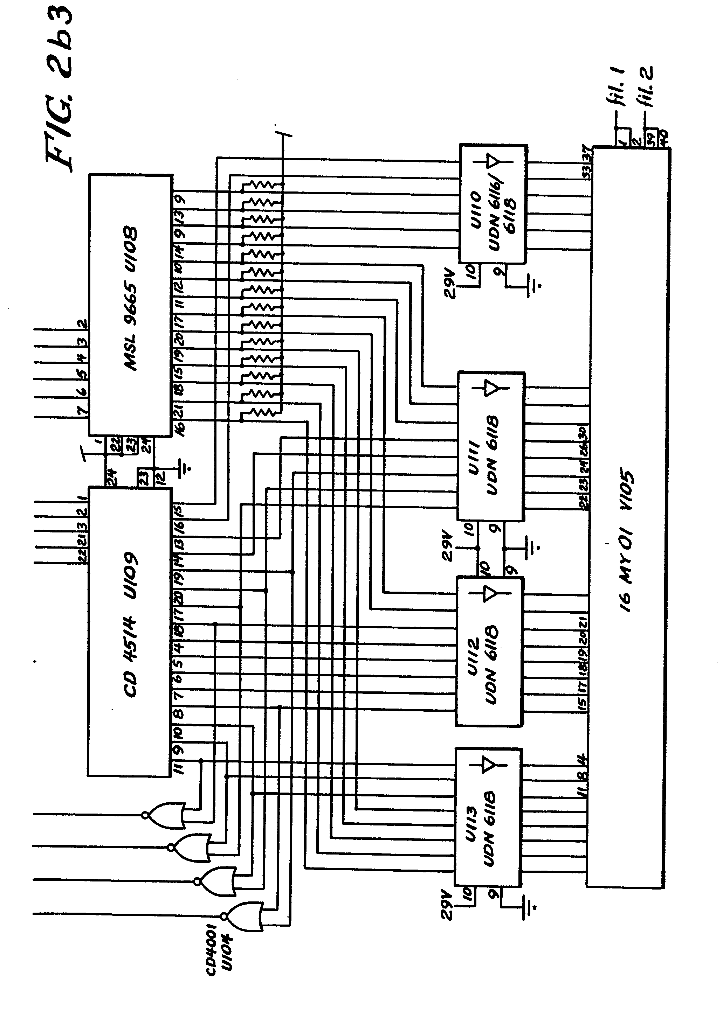

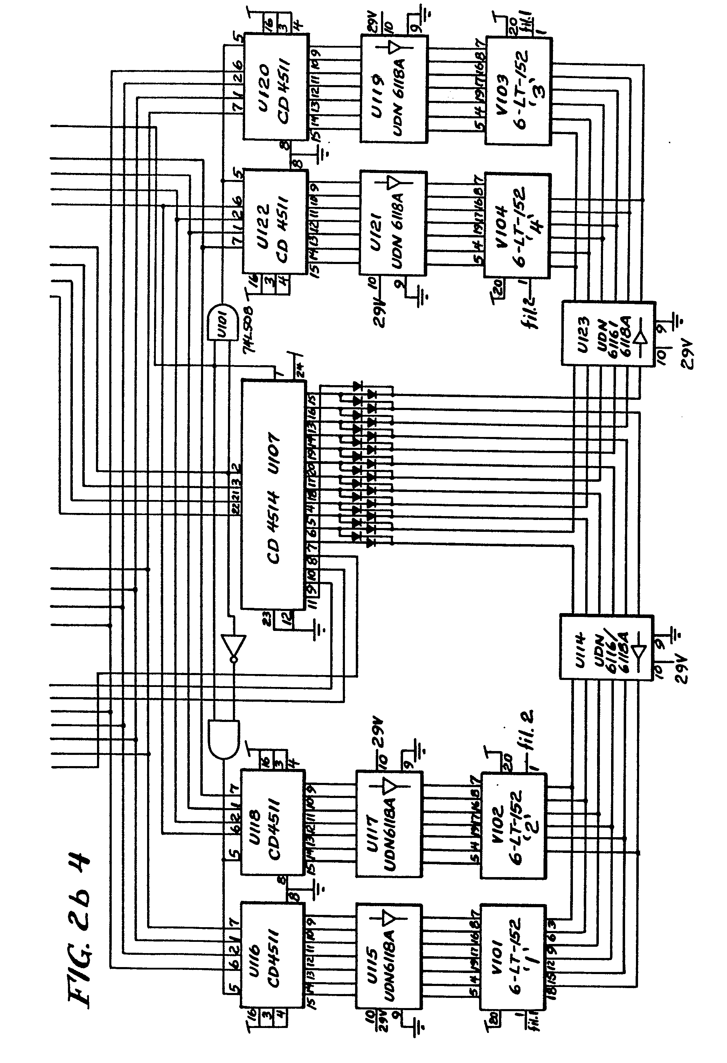

FIG. 2 is a block diagram showing the basic elements of the illustrated control system. Four distinct machine boxes 10,12,14 and 16 are shown on the right hand side of FIG. 2, although it will be understood that provisions can be made for any number of machine boxes by appropriate selection of components. Each of the machine boxes 10,12,14,16 corresponds to a respective cold heading machine and is connected by cables 18 to the control unit contained in the dotted box 5 corresponding to the unit 5 in FIG. 1.

Each machine box 10,12,14,16 supplies two separate signals to the control unit 5. One is a measured signal related to the force imparted by the machine 3 to the workpiece. In the preferred embodiment, this signal is representative of the total energy imparted to the workpiece in a single forming operation, or "hit." It should be noted that another microprocessor based control system uses a signal representative of the peak force only, and not the total energy, upon belief, and this feature is believed to be novel with the embodiment described herein.

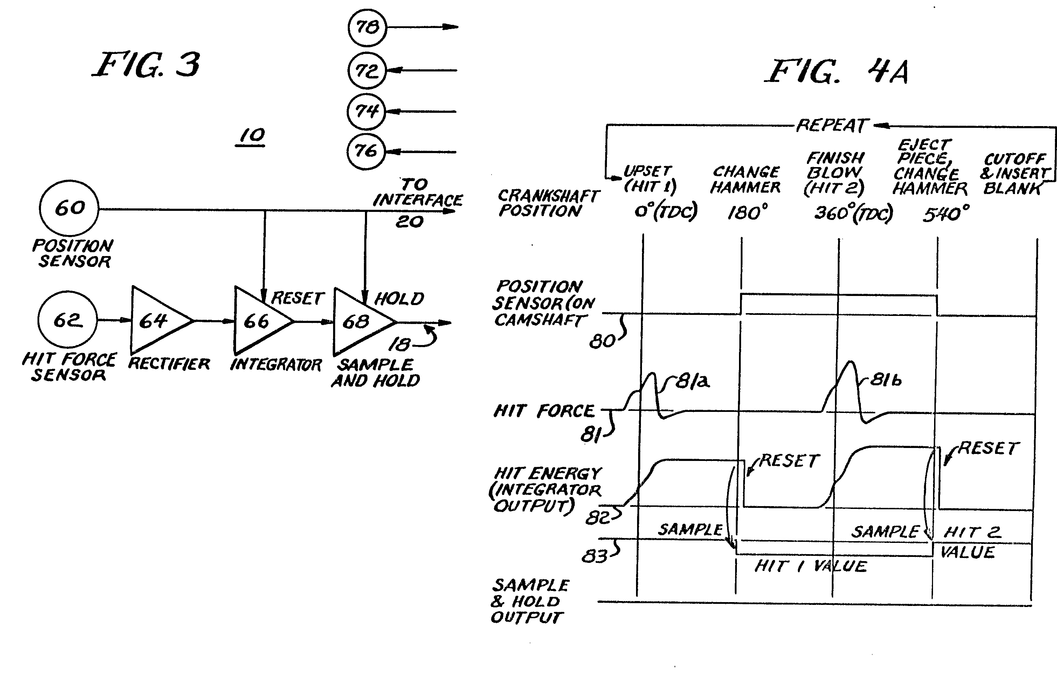

The other signal is an identification signal which identifies to which portion of the total forming cycle the present measured signal corresponds. In this embodiment, the cold heading machine 3 forms each individual workpiece in a two part cycle, in which the workpiece is struck twice in two consecutive hits. The desired value of the measured signal for the first hit (corresponding to the first part of the cycle) will in general differ from the desired value of the measured signal for the second hit (corresponding to the second part of the cycle). The identification signal is a two-state digital signal which identifies each value of the measured signal as corresponding either to the first hit or the second hit. Further details for the machine boxes will be discussed below with reference to FIGS. 3 4 and 4a.

Still referring to FIG. 2, the control unit 5 includes a microcomputer circuit 26, which includes a clock 28, a microprocessor 30, a program memory 32 and a further memory 34. Associated with the computer circuit 26 is a watchdog timer 36 which operates to reset and restart the microprocessor 30 in the event it fails to supply periodic pulses to the timer 36.

Control unit 5 also contains two I/O ports 22,24 and an interface circuit 20 which serve to transmit signals between the machine boxes 10,12,14,16 and the microcomputer circuit 26, as well as various displays and input devices. Specifically, an alphabetic display 40 is controlled by a keyboard/ display controller 42 which communicates with the microcomputer circuit 26 by a data bus or other coupling. A keyboard 44 and key switch 46 each provide further inputs to the keyboard display controller 42. Further, four separate six-digit numeric displays 48 are coupled to the keyboard display controller 42 by a display controller 50.

As previously mentioned, each of the machine boxes 10,12,14 and 16 has associated therewith a respective set of status lamps 72,74,76 and a button 78. The inputs to the system from the machine box buttons 78 pass from the interface circuit 20 to the keyboard display controller 42 via a line 52. The signals which control operation of the status lamps 72-76 pass via line 54 from the display controller 50 to the interface circuit 20. The interface circuit 20, it will be understood, communicates with all of the machine box buttons 78 and status lamps 72-76 via the cables 18.

The circuitry of the control unit 5 is shown in greater detail in FIGS. 2a-2b, which should be referenced for a more detailed understanding of the structure of the control unit 5. With respect to the computer circuit 26, the clock 28 generates a clock signal having a preferred frequency of two and a half megahertz. The microprocessor 30 is preferably a Mostek Z80 CPU, although substitutes can be used.

FIGS. 2a-2b are provided merely to illustrate the preferred embodiment, and it should be understood that details such as the type of microprocessor, the type and number of the displays, and the like can readily be changed in alternative embodiments.

FIG. 3 is a block diagram of one of the machine boxes 10,12,14,16. As can be seen from FIG. 3, each machine box includes a position sensor 60 such as a non-invasive metal detector type FYCC8E1-2 manufactured by Microswitch Division of Honeywell. As explained above, the cold heading machine 3 operates in a two-stage cycle made up of first and second hits. The sensor 60 senses the position of a camshaft 7 (as shown in FIG. 1) which rotates once with each complete cycle. The camshaft is semicircular in cross section, and thus the sensor 60 senses whether the machine 3 is in the first or second stage of the full cycle and generates a two-state signal which is in one binary state during the first hit of each cycle and in the other binary state during the second hit of each cycle.

A hit force sensor 62 is also included, and may consist of a low-cost brass disc having a piezoelectric ceramic on one side, for example, a type 2KBS 27DA-5A manufactured by Kyocera International, Inc. Preferably, the sensor 62 is mounted on the back face of the stationary die of the cold heading machine, near the center of impact, to measure deformation of the die. The output from the sensor 62 is applied to a full wave rectifier 64 which provides a rectified output which is applied to an integrator 66 which illustratively uses operational amplifiers to integrate the rectified output. The integrator 66 is clocked by a signal from the position sensor 60 such that the integrator 66 is reset prior to each hit and operates to integrate the output of the rectifier 64 for the duration of each hit. The integrator output is applied to a sample and hold circuit 68 which also receives an input from the position sensor 60. The output of the circuit 68 is applied to an analog-to-digital converter 70 (included in the control unit 5) such as a National Semiconductor ADC 0809 converter.

FIG. 3 also shows the status lamps 72,74,76 and the reset button 78, described above. The outputs of the position sensor 60, the sample and hold circuit 68, the button 78, and the inputs to the lamps 72,74 and 76 are all connected to the control unit 5 by cables 18.

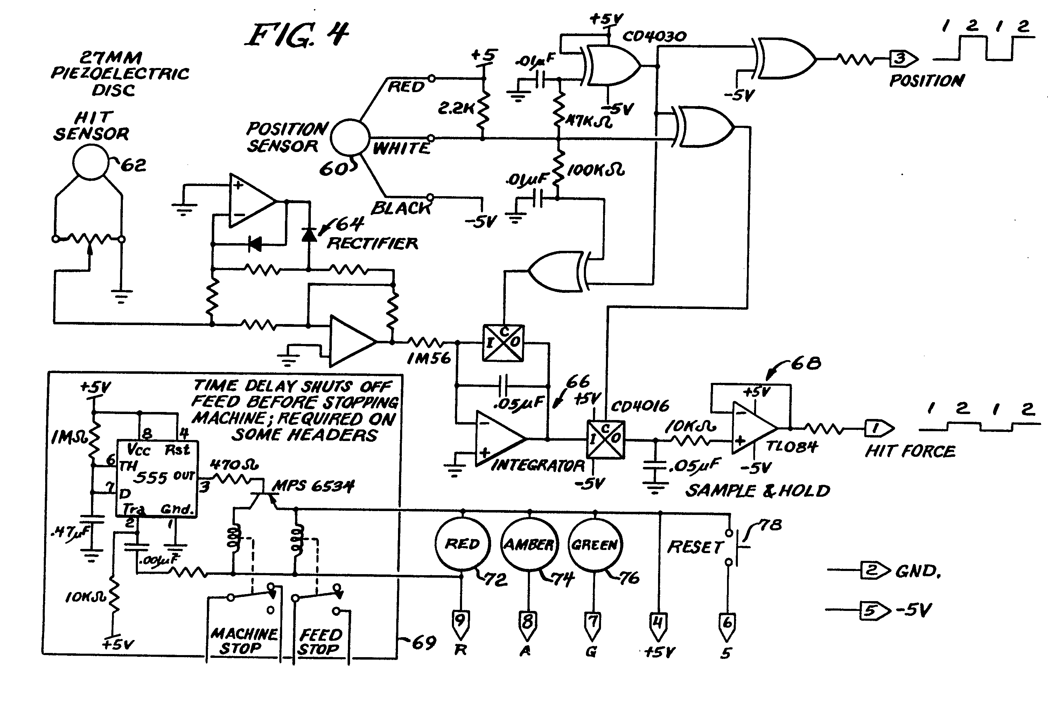

FIG. 4a illustrates the operation of the circuit of FIG. 3. Waveform 80 is the output of the position sensor 60 as a function of time, and is a binary signal which is low throughout the first hit of each cycle and high throughout the second hit of each cycle of the machine 3. Waveform 81 is the output of the hit force sensor 62 as a function of time, showing the forces applied in the first hit and the second hit of a selected cycle at 81a, 81b respectively. Waveform 82 is the output of the integrator 66 as a function of time, showing the manner in which it builds from zero to a positive value related to the time integral of the rectified waveform 81 with each hit. Waveform 83 is the output of the sample and hold circuit 68 which is the measured signal supplied to the converter 70. As shown in FIG. 4a, when the output of the position sensor 60 changes state, the sample and hold circuit 68 is loaded with the current value of the integrator 66, and the integrator 66 is then reset in preparation for the next hit.

FIG. 4 shows a schematic diagram of the presently preferred embodiment of the circuit of FIG. 3.

The circuitry 69 operates first to shut off machine feed and then to shut off the machine 3 whenever the red lamp 72 is illuminated by the control unit 5.

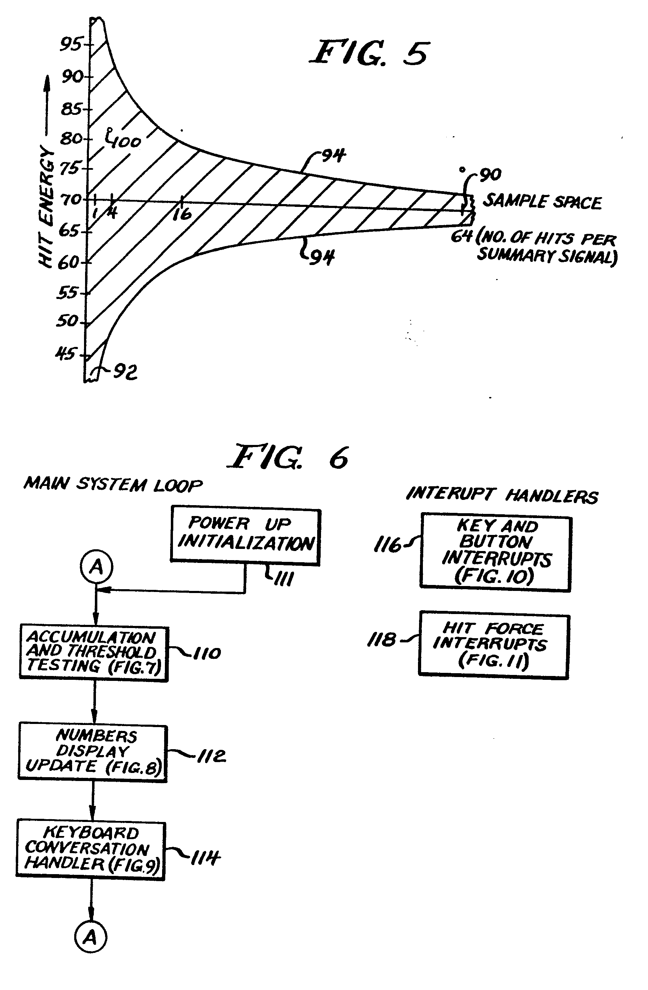

The method practiced by the above described apparatus, when suitably programmed by the software described in detail below, can be understood with reference to FIG. 5. FIG. 5 is a sketch relating the permissible tolerance during a production run to the size of a sample space. Specifically, the abscissa (x-axis) 90 represents the size of the sample space (the number of consecutive values of the measured signal included in the summary signal being evaluated). The ordinate (y-axis) 92 represents the measured value of hit energy. Curves 94 relate the permissible tolerance to the size of the sample space. Briefly, measured values or averages of measured values of hit energy within the shaded area are within tolerance, but those outside the shaded area are out-of-tolerance.

For example, consider the information represented by point 100. Referring to the abscissa 90, it will be seen that point 100 represents an average of four measured values of hit energy, that is, a sample space of four. During the training mode of machine operation it was established that the desired or target value of the hit energy for forming a certain type of workpiece was seventy, and it will be seen that abscissa 90 crosses ordinate 92 at seventy. The curves 94 have been drawn only illustratively and can be varied in the manner explained below. However, it will be observed that point 100 is within the shaded area defined by curves 94, meaning that point 100 is within tolerance. More specifically, point 100 shows that the average of four measured values of hit energy in a production run was approximately eighty-two units of hit energy. However, the operator has set the machine controller to permit a tolerance window (for a sample space of four) of approximately fifty units to ninety units of hit energy. Consequently, point 100 is within tolerance and will not cause the controller to stop operation based on tolerance monitoring.

However, a second point 102 is outside the shaded area defined by curves 94 and is therefore out of tolerance. Such values of the measured signal will cause the controller to stop operation of the machine yielding this data. Specifically, point 102 corresponds to a sample space of 64 consecutive measured values of hit energy in a production run. The averaged measured hit energy, it will be seen, is approximately seventy-eight units of hit energy. However, the operator has set the machine to accept a maximum average hit energy of approximately seventy-three units of hit energy for 64 consecutive hits. Plainly, point 102 is therefore out of tolerance.

It will be seen from FIG. 5 that a wide tolerance is permitted for a very small sample space, such as a single hit, but a much smaller tolerance is permitted for sample spaces of increasing size. In FIG. 5, the tolerances are increasingly smaller for sample groups which have increasingly larger sample spaces, i.e., tolerance and sample spaces are monotonically and inversely related. It will be understood that other relationships can be used than the one illustrated in FIG. 5. Further, it will be appreciated that because the sample space inherently is digital and non-fractional in the present embodiment, curve 94 will often be discontinuous.

FIG. 5 therefore is representative of one aspect of operation of the invented system and method. During the training mode, the system determines an average of hit energy applied to a group of workpieces, which average is stored as a target value. Next, the system operator establishes a set of tolerances for production operations corresponding to permissible deviations from the target value. This set of tolerances is defined by the position of curves 94. Circuits are provided whereby the positions of curves 94 can be adjusted or scaled. During a production run, the averages of selected numbers of measured values of hit energy are calculated by control unit 5. In FIG. 5, points such as point 100 and 102 are permitted to have an x-axis value of one, four, sixteen and sixty-four only. Any sample space can be defined by appropriate programming of the microprocessor, but the preferred mode is as has been set forth herein. It will be understood also that the sample groups can be varied considerably, by skipping every other value of the measured signal, for instance.

Next, in the production mode, the system automatically and electronically determines whether any of the averages, such as points 100 and 102, exceed the established tolerance corresponding to the respective sample space. In other words, the system decides whether each average is within the shaded area of FIG. 5.

Finally, if any average is outside the shaded area, the system will indicate a deviation in a prescribed manner. Preferably, this is done by shutting down the machine which yielded the out-of-tolerance average, together with displaying a message indicative of the reason for the shut down to the machine operator.

It should be noted that this method is applied concurrently and independently to each of the several consecutive forming operations (in this embodiment, two) which together comprise the forming of each finished workpiece. If a deviation from an established tolerance in any (either) of these operations is determined, stopping of the machine or other prescribed action occurs. The following program listing, which is the definitive disclosure of this system, operates in this manner.

**0084284**

Attached hereto is a listing of an assembly
language program used to program the computer circuit 26
in this preferred embodiment.  FIGS. 6 through 11 are
flowcharts which illustrate the operation of the attached
program.  Table I is a cross index between the attached
listing and the flowcharts of FIGS. 6-11.  The listing
is provided as the definitive disclosure of the function
of the computer circuit 26, and the flowcharts and
associated discussion are provided merely to facilitate
understanding of the listing.

TABLE I

|              | LINE NUMBERS OF ATTACHED |
| FIGURE NO.   | LISTING (LEFTMOST COLUMN) |
| --- | --- |
| 6            | 1-5294    |
| 7            | 318-1085  |
| 7a           | 716-865   |
| 8            | 1086-1768 |
| 9            | 1769-4538 |
| 10 and 11    | 4539-5294 |

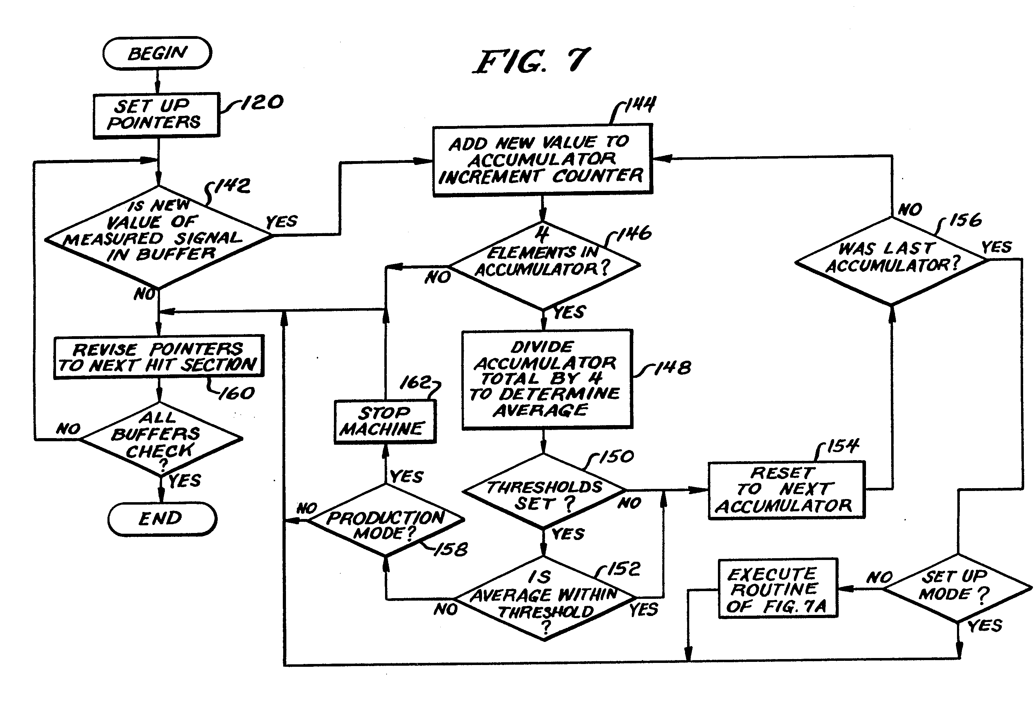

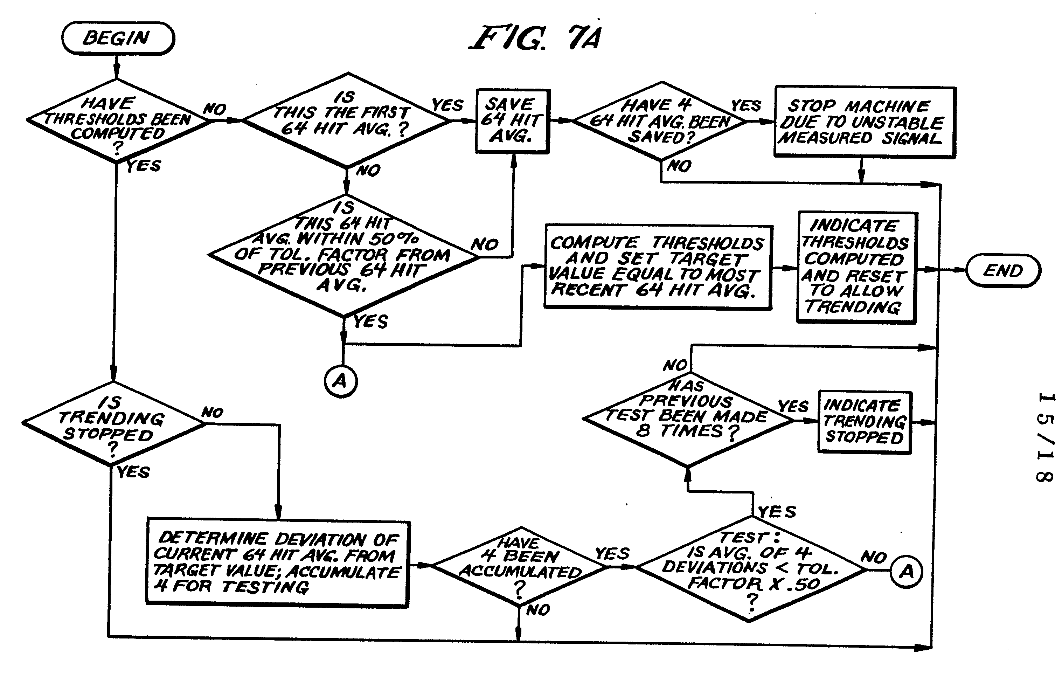

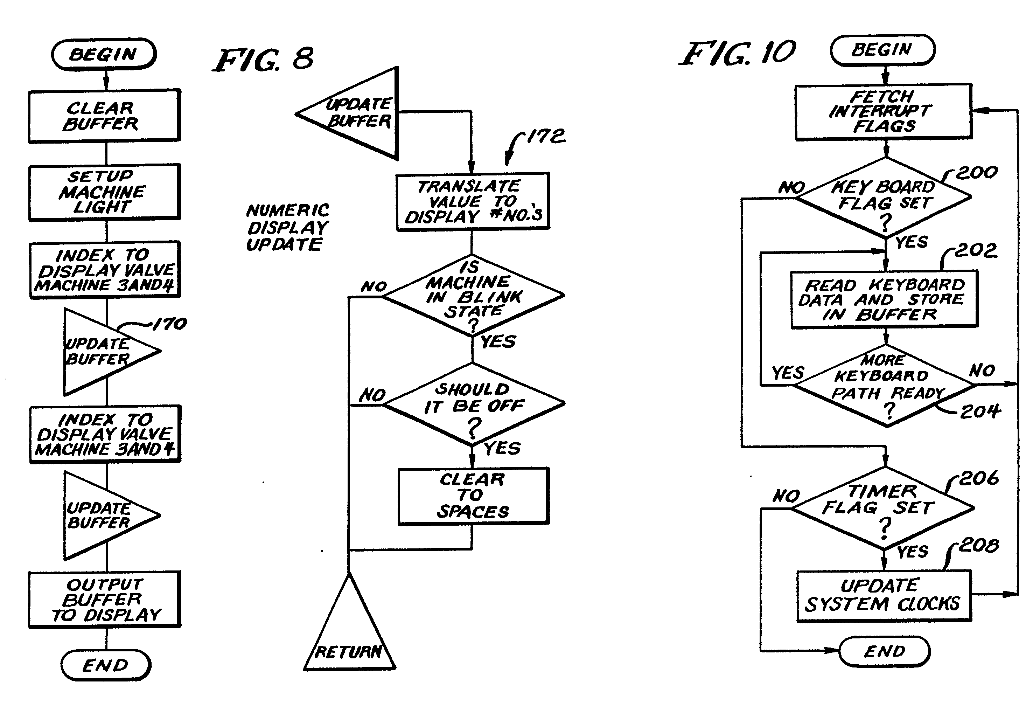

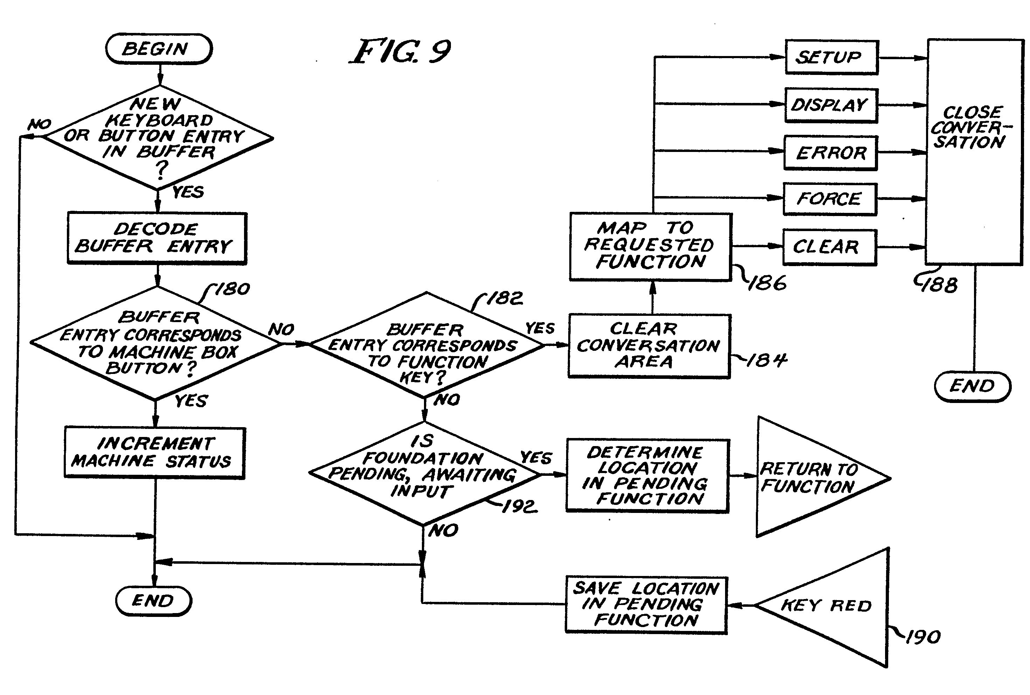

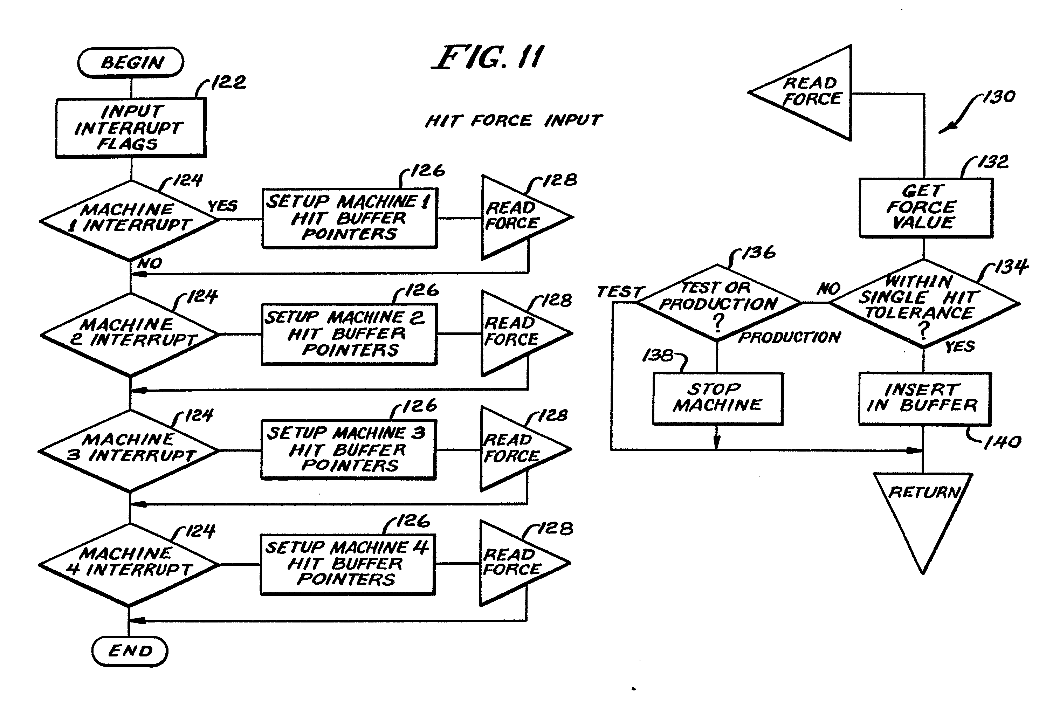

FIG. 6 illustrates the main system loop and various interrupt routines. The main system loop consists of an accumulation and threshold testing routine 110 (shown more specifically in FIGS. 7 and 7a), a numeric display update routine 112 (shown more specifically in FIG. 8), and a keyboard conversation handler routine 114 (shown more specifically in FIG. 9). The interrupt routines include a key and button interrupt routine 116 (shown more specifically in FIG. 10) and a measured signal interrupt routine 118 (shown more specifically in FIG. 11). It is understood that reference in the flowcharts to "hit force" is generic to the output of the machine box related to the force or energy with which the workpiece is struck, and that in the preferred embodiment, a signal related to the hit energy is employed.

From FIG. 6 it will be seen that in the main system loop, the system accumulates data and tests it, updates the numeric display and carries out "conversations" with the operator via the keyboard. This main loop is subject to interrupts 116 and 118 corresponding, respectively, to key and button interrupts and measured signal interrupts.

FIG. 7 illustrates the accumulation and threshold testing routine 110 of the main system loop. Preliminarily, it should be noted that in this preferred embodiment, the program sets up three counters and three respective accumulators, explained _infra_. This is achieved in the microprocessor, but it will be understood that discrete components can be used for this purpose. The microprocessor dedicates two bytes for each accumulator.

In FIG. 7, block 120 represents the step of setting up pointers which are appropriate for the particular machine being controlled. These pointers address information such as the appropriate thresholds, the prior measured values of hit energy, and other pertinent information. Prior to discussing the rest of this flowchart, the measured signal interrupt routine 118 should be discussed.

After a measured value of hit energy is received, it is processed according to the interrupt routine 118 of FIG. 6, which is shown more fully in FIG. 11, where it will be seen that provision is made for four cold heading machines. After interrupt flags are fetched at block 122, a decision is made as to where the interrupt originated. Thus, a set of decision diamonds 124 identifies the machine which generated the interrupt. Blocks 126 set up buffer pointers for the respective machines, and triangles 128 represent the READ FORCE subroutine. Each of the triangles 128 calls a subroutine 130 in which a measured value of hit energy, which corresponds to the signal supplied to the analogue to digital converter 70 in FIG. 3, is obtained in block 132. A decision diamond 134 determines whether each individual measured value is within the single hit tolerance. If it is not, a decision diamond 136 questions whether the system is in a training mode or a production mode. If the machine is in the training mode, then that measured value is preserved for determining the average
of the hit energy for use in determining a target value.
If the system is in the production mode, however, the
out-of-tolerance measured value will cause the control
unit 5 to stop the machine as shown by block 138.
Referring again to diamond 134, if the measured value
is within tolerance, it is inserted into a buffer set
up by the program as represented by block 140, and the
READ FORCE subroutine then returns.

Returning now to FIG. 7, after the pointers
are set up at block 120, a decision diamond 142 determines whether a new measured value of hit energy is in
the buffer.  It will be recalled that when the system
is in the production mode, a measured value is not
placed in the buffer unless it is within the single
sample tolerance.  A single measured value, it will be
understood, corresponds to a sample space of size "1".
If the measured value is in the buffer, a number representative of the measured value is added to an accumulator and a corresponding counter is incremented, as shown
in a block 144 of FIG. 7.

Much of the flowcharts of FIGS. 7 and 7a relates
to the selection of data of various sizes of sample space
and the testing thereof to determine whether such data
is within prescribed tolerances.  It will be remembered
that three accumulators and three counters are maintained.
Whenever a hit occurs in the production mode, the respective measured value of hit energy is first tested to
see whether it, individually, is within tolerance.  If
so, that measured value then becomes one element in the
next sample group as shown at block 144.  In the preferred embodiment, the next sample group has four elements (a sample space of four).  Decision diamond 146
determines whether four accumulations have occurred,
and if not, it returns the system to await the next hit.
If four accumulations have occurred, then the accumulator total is divided by four at block 148 to find the average of its four elements. Assuming the thresholds have been set, as interrogated at diamond 150, the system then determines whether the average for the most recently accumulated group of four elements is within the prescribed tolerance. This occurs at decision diamond 152. Assuming that the average for this group of four elements is within tolerance, the system then resets at block 154 to the next accumulator.

In this manner, the average of the first four measured values becomes one element in the next sample group, which itself has four elements, each consisting of an average of four prior sample groups. It will therefore be understood that this counting geometrically increases the sample space of the sample groups which are tested. Thus, the first accumulator is used to determine the average of the measured signal for four hits. The second accumulator is used to determine the average of the measured signal for 16 hits. The third accumulator is used to determine the average of the measured signal for 64 hits. Decision diamond 156 determines whether the last accumulation has occurred.

Referring back to decision diamond 152, after an average is determined for a sample having four elements, if such average is not within tolerance, the system determines at decision diamond 158 whether it is in the production mode. If the system is not in the production mode, then it returns to await the next hit from the machine as shown in block 160. If the system, however, is in the production mode, then the out-of-tolerance average will cause the control unit 5 to cause the respective machine box 10 to interrupt operation of the machine 3 as indicated at block 162.

FIG. 7a shows a detailed flowchart of a routine which is called by the routine of FIG. 7 in order to set and adjust the target values and thresholds used by the control unit 5 to determine whether individual measured values of the hit energy as well as averages of the measured values are within tolerance. This routine is called after every new 64 hit average of the measured signal is obtained, unless the control unit is in the setup mode.

As shown in FIG. 7a, this routine first checks to see whether thresholds have yet been computed. If not, the routine compares the most recent 64 hit average with the previous 64 hit average and determines whether the new average is within 50% of the tolerance factor, a parameter indicative of the allowed deviation of the 64 hit average from a target value in the production mode. If not, the routine returns. If four 64 hit averages fail to meet this test, the routine causes the control unit to stop operation of the machine due to unstable averages of the measured values of hit energy.

Once two consecutive 64 hit averages are equal to within 50% of the tolerance factor, the routine then sets a target value, which is indicative of the desired long term average of the measured value of hit energy during the production mode, equal to the most recent 64 hit average. The routine then generates four separate thresholds, or ranges of acceptable values, for the various averages of the measured signal. The thresholds for the 64,16,4 and 1 hit averages are set at the target value plus or minus 1,2,4 and 8 times the tolerance factor, respectively. It is these thresholds which are used as described above in evaluating the measured values and averages of the measured values of the hit energy.

If thresholds have been computed and stored prior to entry to the routine of FIG. 7a, the routine checks to see if revision and adjustment of the thresholds is still allowed. In this embodiment, if 8 consecutive 256 hit averages, each made up of 4 separate 64 hit averages, deviate from the target value by less than 50% of the tolerance factor, a flag is set to prevent further adjustment of the target value. However, prior to this time, the routine checks each 256 hit average to determine whether the difference between the 256 hit average and the target value is greater than 50% of the tolerance factor. If so, the routine recomputes the target value and the thresholds based on the most recent 64 hit average.

Thus, the routine of FIG. 7 will interrupt machine operation if a 1,4,16 or 64 hit average falls outside the respective threshold, and the routine of FIG. 7a will gradually adjust the thresholds during an initial period corresponding to machine warm-up when measured values of the hit energy will often change gradually. In this way, the control unit monitors and controls machine operation during machine warm-up, but unnecessary machine shut downs are avoided.

FIG. 8 represents the numeric display update routine 112 in the main system loop of FIG. 6. It will be understood that the function of this routine is to display numeric data on the displays 48. Data are stored in a buffer for display, as shown at triangle 170, which calls an UPDATE BUFFER subroutine 172.

FIG. 9 illustrates the organization of the keyboard conversation handling routine 114 of the main system loop shown in FIG. 6. As shown in FIG. 9, the routine decodes a new entry in the input buffer and determines whether this entry corresponds to the machine box button 78 from one of the machine boxes 10,12,14,16. If so, the routine advances the status of the respective machine, as described below. If not, the routine then determines whether the entry is a keyboard entry requesting one of several programmed functions, and if so initiates the requested function. If the entry corresponds to neither of these alternatives, the routine then determines if a function is in progress and passes control back to the function if so.  Otherwise, the routine returns.

In this embodiment, five separate functions have been programmed, and an operator can call up any one of these five functions from the keyboard to enter information into and obtain information from the system. The five functions which are presently incorporated in the illustrated embodiment are SET UP, DISPLAY, ERROR, FORCE, and CLEAR.  Briefly, the SET UP function allows an operator to set production quantities and parameters and allows the operator to clear previously entered values from the system.  The DISPLAY function allows the operator to select the information which is displayed by the control unit 5.  The ERROR function allows the operator to learn the reasons which caused the control unit to shut down a machine.  The FORCE function allows the operator to obtain the single and average values of the measured values of hit energy during the machine operation.  The CLEAR function allows the operator to clear the alphanumeric display 40 of any messages so that other indications may be made.

The SET UP function operates in two different modes, depending on whether the key switch 46 is in the locked or unlocked position.  When the switch 46 is in the unlocked position, the SET UP function allows the operator to enter the following values required to define a production run on a selected machine:

1)  Production count  - count of total workpieces to be made;

2)  Break count       - count of workpieces
                        after which machine
                        will be stopped for
                        workpiece inspection;

3)  Tolerance         - the tolerance factor.

0084284

The conversation with the system begins with the control unit 5 requesting an identification of the machine for which values are to be entered. The system, via a display, then prompts the operator for the information enumerated above. When all of these prompted items have been entered, the identified machine is then ready for the system to enter the training and production modes.

When the key switch 46 on the control unit 5 is in the locked position, the system allows the operator to alter only items (2) and (3) listed in the previous paragraph. The system will display a prompt of a particular value or indication, and the operator presses an ENTER key to clear it or a NEXT key to go on to a subsequent value to be prompted.

The DISPLAY function allows the operator to select the parameter to be displayed on the numeric displays 48 of the system. The system will put a prompt message of a selectable parameter on the display, and the operator uses the ENTER key to select that specific parameter for display or the NEXT key to go on to a subsequent parameter. The parameters available for display include the total production run to be made, the total production run made so far, the break count parameter, and the break count so far.

The ERROR function allows the operator to determine why a machine has been stopped and to clear the error indication. After selecting the desired machine, the controller displays a simple message to inform the operator of the error which occurred. By pressing the ENTER key, the operator can clear an error indication, and by using the NEXT key, the operator can cause the indication to be left intact and the next error message to be displayed.

The FORCE function allows the operator to observe the incoming or average values of the measured signal of the hit energy for a particular machine. The operator selects the machine and the parameter to be displayed by entering a code. For example, entry of the number "0" will cause individual values of the measured signal of hit energy to be displayed. Entry of the number "1" selects display of the four hit average of the measured signal. Entry of the number "2" selects display of the 16 hit average, and entry of the number "3" designates display of the 64 hit average.

Each of the keyboard keys for the SET UP, DISPLAY, ERROR, FORCE, and CLEAR functions is a function key as that term is used in decision diamond 182 of FIG. 9. If a function key has been activated, the program maps to the selected function, permits the controller to conduct the conversation, and then closes the conversation as shown in boxes 184, 186, and 188 respectively.

In order not to delay unduly response to new values of the measured signal, each of the function routines has been designed to return control to the main program loop of FIG. 6 via the KEYRED routine whenever the function is awaiting an operator response. The KEYRED routine saves the relevant addresses and sets a flag indicating that one of the functions is pending, awaiting a keyboard input. Then, when the operator provides the awaited keyboard input, the decision diamond 192 causes control to be returned to the appropriate point in the pending function. In this way, lengthy interaction between the operator and the controller does not interfere with timely response by the control unit 5 to changing values of the measured signal.

FIG. 10 illustrates the flowchart for the key and button interrupt routine represented by block 116 of FIG. 6. This is a straightforward routine wherein if a keyboard flag is set, as determined at decision diamond 200, the control unit reads the key from the appropriate I/O port and stores the key identification in a buffer, as represented at block 202. Diamond 204 insures that all keys intended to be read are in fact read. The routine of FIG. 10 also includes a clock update routine. If a timer sets a flag, as determined at diamond 206, the control unit updates the system clocks at block 208.

The operation of the control unit 5 and machine box 10 is briefly described as follows. The system operator presses the machine box button 78 for the specific machine he wishes to set up. This causes the control unit 5 to change the status of the respective machine from the stopped mode (red lamp 72 illuminated) to the setup mode (amber light 74 illuminated). This allows the machine to run while the operator adjusts the machine for production. A supervisor or the machine operator next turns the key switch 46 on control box 5 to the unlocked position and enters the desired production parameters.

When the machine has been properly adjusted for satisfactory operation and the production values have been entered, the operator then presses the machine box button again. This causes the control unit 5 to illuminate both the amber lamp 74 and the green lamp 76 (FIG. 3) on the respective machine box 10,12,14 or 16 to indicate that the unit 5 is in the training mode and is operating to determine the target value of the measured hit energy that will be used as a standard against which measured values of the hit energy will be compared in the production mode. When the measured values have remained consistent for at least 128 workpieces, the control unit 5 turns off the amber lamp 74, showing that the tolerance windows have been computed for the run and that the control unit 5 is in the production mode.

The control unit 5 then monitors the incoming measured values of the hit energy for the operating machine, ensuring that they remain within the computed tolerance windows as described above.

If a measured value or an average of measured values of hit energy falls beyond the respective computed tolerance window, the control unit 5 illuminates the red lamp 72 (FIG. 3) to shut down the respective machine and causes the corresponding numeric display 48 (FIG. 2) to blink about once a second. If the display 40 is not otherwise in use, the control unit 5 causes alphanumeric display 40 to display the message "ERROR" with the machine number following. The operator can then display the error or errors for that machine, correct the problem, and resume or restart the production run. When the control unit 5 has counted up to the total production run called for on that machine, the unit 5 will cause the machine to stop and the corresponding display to blink about once every four seconds.

The use of multiple tolerance windows as described above provides the dual advantages that long term averages of the measured signal can be held within close tolerances, yet short term averages can be allowed to vary widely. In this way, short term deviations of the measured signal (such as those associated with hard spots) result in fewer unnecessary interruptions in machine operation, yet large volume quality control is maintained.

During an initial warm-up period, the control unit 5 automatically adjusts the target value to track trends in the incoming measured signals. Throughout this warm-up period, which in this embodiment extends for at least 2048 hits, the control unit 5 checks the measured signal, as discussed above, and interrupts machine operation if any of the individual or average measured signals falls outside the respective tolerance window. In addition, the control unit 5 operates during the warm-up period to calculate 256 hit averages of the measured signal and to reset the target value to the most recent 64 hit average in the event that a 256 hit average deviates from the old target value by more than one-half the tolerance factor. Once the target value has not changed for 2048 hits, the control unit 5 is prevented from further automatic alteration of the target value without interrupting machine operation.

This feature of the invention saves operator time, in that the operator need not monitor machine operation during the warm-up period when the measured signal changes slowly. Rather, the control unit 5 operates simultaneously to monitor and control machine operation while revising the target value to track gradual trends in the measured signal. Of course, it should be understood that the particular criteria described above for determining how to revise the target value and when to prevent further revision of the target value are merely illustrative of the presently preferred embodiment, and are not to be construed as limiting; other criteria may be used in alternative embodiments.

Provision is made to impart a tolerance factor to adjust the sizes of the tolerance windows. These factors are identified by the numbers "1" through "9." This provision can best be explained through an example. Thus, if a factor of "1" is entered, each sixty-four hit average must be within 1/128 of the target value, each sixteen hit average must be within 2/128 of the target value, each four hit average must be within 4/128, and each single value of the measured signal must be 8/128 of the target value. However, if the tolerance factor were set at "2", then the tolerance windows would be twice as large. Further, if the factor were "3", then the tolerance windows would be three times as large, and so on. It will be appreciated that other forms of adjustment and window selection can easily be made.

In an alternative embodiment (not shown), the program for the control unit 5 may be modified to provide the operator with further information in order further to reduce unnecessary interruptions of machine operation in the production mode. In this embodiment the control unit 5 provides a warning indication to the operator whenever any of the measured signal averages or any of the individual values of the measured signal nears an extreme of the respective threshold window. For example, assuming the threshold window for the four-hit average is 80 to 120 units of hit energy, the control unit 5 can be programmed to provide the warning indication whenever the four-hit average is within the range 80-120 but outside the range 85-115, or even 90-110. The operator may then adjust machine operation to make the measured signal more nearly equal the target value, thereby avoiding an unnecessary interruption of machine operation. This feature can advantageously be combined with the features discussed above in connection with the figures.

The embodiments described above, although preferred, are to be taken as illustrative. It will be understood that many modifications to the described and illustrated embodiments can be made within the spirit of the present invention, which is defined by the following claims:

WE CLAIM:

1.    In a metal forming machine, a machine-implemented control method comprising the steps of:

acquiring information regarding hits of said metal-forming machine applied to workpieces for acceptable machine operation;

acquiring a set of tolerances for production mode metal-forming operations corresponding to permissible deviations from the acquired information regarding hits, for each of plural sample groups of predetermined sample spaces;

determining, in a production mode, representative information regarding the hits of groups of samples of said predetermined sample spaces; and

automatically and electronically determining whether said representative information for any of said samples or groups of sample deviates beyond the acquired corresponding tolerance for sample groups having that sample space.

2.    The method of claim 1 wherein said acquiring information regarding hits step comprises determining information representative of the hits applied to a group of pieces during a training phase through determining an average of hit energy applied to a group of pieces during said training phase, and wherein the determination of representative information during the production phase comprises determining the average operating hit energy of groups of samples of predetermined sample spaces.

3.    In a metal-forming machine, a machine-implemented control method comprising the steps of:

during a training phase wherein said machine is operated to impart hits to pieces, determining an average of hit energy applied to a group of pieces resulting in acceptable metal-forming operation, and storing said average;

establishing a set of tolerance windows for subsequent metal-forming operations for plural groups of samples each having a respective, different predetermined sample
space, said tolerances varying as a function of the sample
space and being monotonically and inveresely related to the
sample space;

operating the metal-forming machine in a production phase and determining the average operating hit energy for gourps of samples of predetermined sample spaces;

determining whether said average production phase
hit energy for any of said groups of samples exceeds the
established tolerance corresponding to that sample space;
and

indicating deviation of any sample or group of
samples beyond its established tolerance by stopping metal-
forming operations.


4.    In a metal-forming machine,  a machine-implemented
method for monitoring tolerance during production to allow
limited deviations from a prescribed norm over a short term
without shutting down production, while still ensuring longer term compliance to tolerances from said norm, comprising
the steps of:

receiving sample information regarding a production
parameter to be monitored;

defining a set of m groups of samples $g_1$, $g_2$, $\ldots$
$g_m$ and arranging said received information into said groups,
said group $g_1$ corresponding to short term production and
said group $g_m$ corresponding to longer term production, the
sample space $S_m$ of group $g_m$ being a number which is larger than the
sample space of group $g_1$;

defining a set of tolerances corresponding to
said sample groups;

repetitively and electronically determining
whether each of said m groups of samples deviate beyond
its corresponding tolerance from said norm, and, if so;

providing an indication thereof.

5. A control system for a metal-forming machine to indicate whether said machine in a production run is producing samples which are beyond preselected tolerances, said system comprising:

a data entry system coupled to said metal-forming machine including a sensor for determining a hit parameter, said data entry system developing a signal related to hits of the machine to workpiece;

input and output means for communicating information between said system and a machine operator;

computing circuit means coupledto said data entry system and said input means for receiving and storing sets of tolerance for metal-forming operations corresponding to permissible deviations from acceptable operation of said metal-forming machine for plural groups of samples of predetermined sample spaces, said computing circuits means also being arranged for receiving data from said data entry system, arranging said data into groups having said predetermined sample spaces, calculating a representative signal for the hit parameter for each of said groups, and determining whether each of said representative signals exceeds the corresponding respective tolerances for groups of said sample spaces.

6. A control apparatus for a material forming machine of the type which forms a plurality of workpieces through a sequence of respective forming operations, said control apparatus comprising:

means for generating a sequence of measured signal, each representative of a measured parameter of a respective one of the forming operations;

means, responsive to the measured signals, for automatically and repeatedly generating a sequence of first summary signals, each of said first summary signals representative of a set of n separate measured signals, where n is an integer reater than zero;

means, responsive to the measured signals, for automatically and repeatedly generating a sequence of second summary signals, each of said second summary signals representative of a set of m separate measured signals, where m is an integer greater than n; and

means for comparing the first and second summary signals with first and second ranges of values, respectively, and for generating an indicator signal when a first selected number of the first summary signals are outside the first range of values, or a second selected number of the second summary signals are outside the second range of values;

said second range of values being smaller than said first range of values.

7. The invention of claim 6 wherein each of the first and second ranges of values is centered about a target value and wherein the invention further comprises means, responsive to the measured signals, for automatically generating the target value as a function of a plurality of the measured signals during an initial period.

8. The invention of claim 7 wherein each of the first and second ranges of values is centered about a target value and wherein the invention further comprises means for automatically and gradually adjusting the target value to track selected changes in the measured signals during a preliminary period.

9. A control apparatus for a material forming machine of the type which forms a plurality of workpieces through a sequence of respective forming operations, said control apparatus comprising:

means for generating a sequence of measured signals, each representative of a measured parameter of a respective one of the forming operation;

0084284

first means, responsive to the measured signals, for signalling an out-of-tolerance condition when the sequence of measured signals differs from a target value by more than a first amount over a first time period; and

second means, responsive to the measured signals, for signalling an out-of-tolerance condition when the sequence of measured signals differs from the target value by more than a second amount over a second time period;

said first amount being less than the second amount and said first time period being longer than said second time period.

10. The method of claim 1 wherein said plural sample groups include sample spaces of differing sizes the tolerances for groups of larger sample spaces being smaller than the tolerances for sample groups of smaller sample spaces.

FIG. 1

FIG. 2

2/18

0084284

FIG. 2a 1

10 PIN MOLEX

FIG. 2a 2

2N3906

2.5MHz

74S
112
U21

XTAL
5.0MHz

74S04
U20

U11
74LS138

U12
74LS138

U17
3880

U13
2532

U14
2532

U15
2016

U16
2016

4/18

0084284

# FIG. 2a 3

5/18

0084284

9 PIN MOLEX

FIG. 2a 4

50 PIN SCOICHFLEX

FIG. 2b 1

7/18

0084284

# FIG. 2b2

P101

D7 D6 D5 D4 D3 D2 D1 D0

+5V   29V   fil.2   fil.1

D8279   U106

8/18

0084284

FIG. 2b3

9/18

0084284

FIG. 26 4

## FIG. 3

*10*

78 →

72 ←

74 ←

76 ←

60 — TO INTERFACE 20

POSITION SENSOR

62 HIT FORCE SENSOR → 64 RECTIFIER → 66 INTEGRATOR RESET → 68 SAMPLE AND HOLD HOLD → 18

## FIG. 4A

REPEAT ←

| | UPSET (HIT 1) | CHANGE HAMMER | FINISH BLOW (HIT 2) | EJECT PIECE, CHANGE HAMMER | CUTOFF & INSERT BLANK |
|---|---|---|---|---|---|
| CRANKSHAFT POSITION | 0°(TDC) | 180° | 360°(TDC) | 540° | |

POSITION SENSOR (ON CAMSHAFT 80

HIT FORCE 81 — 81a — 81b

HIT ENERGY (INTEGRATOR OUTPUT) 82 — RESET — RESET

83 — SAMPLE — SAMPLE — HIT 2 VALUE

HIT 1 VALUE

SAMPLE & HOLD OUTPUT

**FIG. 4**

27MM PIEZOELECTRIC DISC

HIT SENSOR

POSITION SENSOR 60

CD4030

POSITION

RED
WHITE
BLACK

2.2K
47KΩ
100KΩ
.01μF

64 RECTIFIER

+5V
-5V

TIME DELAY SHUTS OFF FEED BEFORE STOPPING MACHINE; REQUIRED ON SOME HEADERS

Vcc Rst
TH 555 OUT
D Tra Gnd.

MPS 6534

470Ω
1MΩ
10KΩ
.47μF
.001μF

MACHINE STOP
FEED STOP

69

RED 72
AMBER 74
GREEN 76
RESET 78

R A G +5V 5

1M56

INTEGRATOR
.05μF
66 +5V
CD4016
SAMPLE & HOLD
.05μF
10KΩ
68
TL084
HIT FORCE

GND.
-5V

# FIG. 5

HIT ENERGY

95
90
85
80
75
70
65
60
55
50
45

100
94
90 SAMPLE SPACE
14
16
94
92
64 (NO. OF HITS PER SUMMARY SIGNAL)

# FIG. 6

MAIN SYSTEM LOOP

INTERUPT HANDLERS

| POWER UP INITIALIZATION | 111 |

Ⓐ

| ACCUMULATION AND THRESHOLD TESTING (FIG.7) | 110 |

| NUMBERS DISPLAY UPDATE (FIG.8) | 112 |

| KEYBOARD CONVERSATION HANDLER (FIG.9) | 114 |

Ⓐ

116 | KEY AND BUTTON INTERRUPTS (FIG.10) |

118 | HIT FORCE INTERRUPTS (FIG.11) |

FIG. 7

14/18

0084284

FIG. 7A

**FIG. 10**

BEGIN

FETCH INTERRUPT FLAGS

200 — KEY BOARD FLAG SET ? — NO / YES

202 — READ KEYBOARD DATA AND STORE IN BUFFER

204 — MORE KEYBOARD PATH READY ? — NO / YES

206 — TIMER FLAG SET ? — NO / YES

208 — UPDATE SYSTEM CLOCKS

END

**FIG. 8**

BEGIN

CLEAR BUFFER

SETUP MACHINE LIGHT

INDEX TO DISPLAY VALVE MACHINE 3 AND 4

UPDATE BUFFER — 170

INDEX TO DISPLAY VALVE MACHINE 3 AND 4

UPDATE BUFFER

OUTPUT BUFFER TO DISPLAY

END

172

UPDATE BUFFER

TRANSLATE VALUE TO DISPLAY #NO.3

IS MACHINE IN BLINK STATE ? — NO / YES

SHOULD IT BE OFF ? — NO / YES

CLEAR TO SPACES

RETURN

NUMERIC DISPLAY UPDATE

# FIG. 9

*FIG. 11*

HIT FORCE INPUT